# EUROPEAN PATENT APPLICATION

(11) **EP 1 128 122 A1**
(43) Date of publication of application: **29.08.2001**
(21) Application number: 00904024.7
(22) Date of filing: 18.02.2000
(51) Int. Cl.: F16L 55/16, F16L 55/18

(54) **RECLAMATION PIPE BORING DEVICE FOR SEWERAGE**

(30) Priority: 23.07.1999 JP 20898199
(71) Applicant: Matsumoto System Engineering Co. Ltd., Kasuya-gun, Fukuoka 811-2414 (JP); Nanyo Co. Ltd., Fukuoka-shi, Fukuoka 812-0016 (JP)
(72) Inventor: MATSUMOTO, Ryozo, Kasuya-gun, Fukuoka 811-2416 (JP)
(74) Representative: Kirschner, Klaus Dieter, Dipl.-Phys.
(86) International application number: JP0000921
(87) International publication number: WO0107821

(57) **Abstract**

A reclamation pipe boring apparatus for sewerage wherein a vehicle body (14) is provided with an outrigger (20) upwardly projecting via the center thereof and actuated by hydraulic pressure, a cutting device (25) disposed in the front region of the vehicle body (14), actuated by hydraulic pressure and having a rotary cutter (24) at the front end, lift means (30) actuated by hydraulic pressure to move the cutting device (25) up and down, reach means (35) actuated by hydraulic pressure to move the cutting device (25) back and forth, and swing means (40) actuated by hydraulic pressure to turn the cutting device (25) clockwise and counterclockwise.

## Description

### TECHNICAL FIELD

The present invention relates to a reclamation pipe boring apparatus for sewerage, to bore a hole in a region of a reclamation pipe corresponding to an opening of a branch pipe during a pipe reclaiming operation for forming the reclamation pipe within an existing pipe in sewerage

### BACKGROUND ART

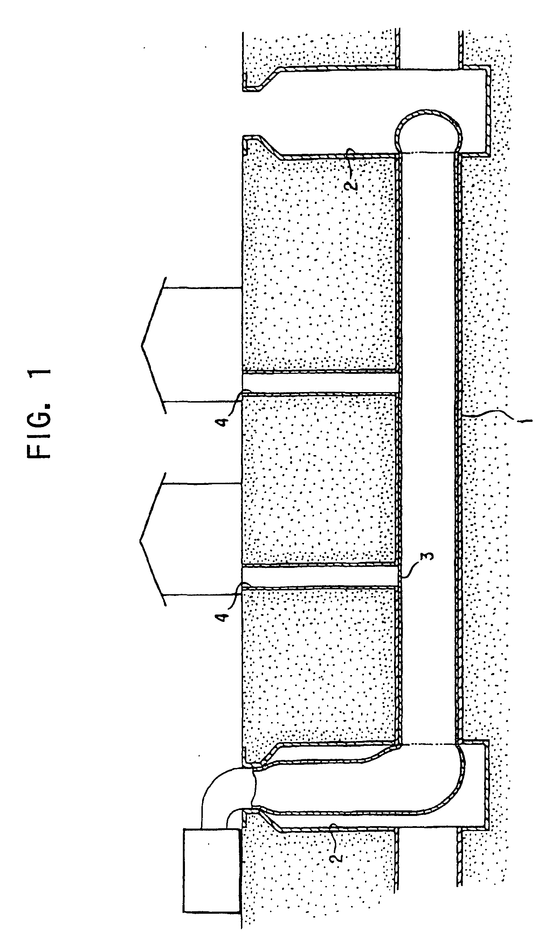

Heretofore, a pipe reclaiming operation has been known to reclaim an existing decrepit pipe in sewerage by forming a reclamation pipe therein. As shown in Fig. 1, an operation for forming the reclamation pipe 3 within the decrepit pipe is typically accomplished by the steps of inserting a tube formed of thermosetting resin into the decrepit pipe, e.g. a main pipe 1, from a manhole 2, expanding the tube within the pipe, and injecting a steam within the tube to thermally cure the thermosetting resin of the tube.

In such a pipe reclaiming operation, since the main pipe has a number of branch pipes 4, each opening of these branch pipes 4 is closed up by forming the reclamation pipe 3 within the main pipe. Thus, it has been necessary to bore a hole in the region of the reclamation pipe 3 corresponding to each of the closed openings of the branch pipes 4.

With this view, a boring apparatus has heretofore been inserted into the main pipe having the reclamation pipe formed therein to bore a hole in the region of the reclamation pipe corresponding to each opening of the branch pipes 4 with cutting means, such as a cutter driven by an electric motor.

The conventional boring apparatus has involved problems such that increased overall size and weight of the apparatus due to the electric motor or the like equipped therewith have caused difficulty in applying the apparatus to all pipes having various diameters and in providing a smooth movement of the apparatus within the main pipe. In addition, the conventional boring apparatus has involved other problems such that various functions cannot be freely employed due to the requirement for preventing from enlarging the entire size of the apparatus, which has caused difficulty in adequately positioning the apparatus when boring a hole in the region of the reclamation pipe corresponding to each opening of the branch pipes within the main pipe and in stabilizing a vehicle body of the apparatus during the boring operation.

### DISCLOSURE OF THE INVENTION

It is an object of the present invention to solve these problems and to provide a reclamation pipe boring apparatus for sewerage, excellent in operation performances.

According to the present invention, there is provided a reclamation pipe boring apparatus for sewerage, comprising a vehicle body, an outrigger upwardly projecting via the center of the vehicle body and actuated by hydraulic pressure, a cutting device disposed in the front region of the vehicle body, actuated by hydraulic pressure and having a rotary cutter at the front end of the cutting device, lift means actuated by hydraulic pressure to move the cutting device up and down, or vertically, reach means disposed in the vehicle body and actuated by hydraulic pressure to move the cutting device back and forth, or longitudinally, and swing means disposed within the vehicle body and actuated by hydraulic pressure to turn the cutting device clockwise and counterclockwise, or laterally.

The reclamation pipe boring apparatus may further include an outrigger control valve to control the hydraulic pressure for actuating the outrigger, a cutting control valve to control the hydraulic pressure for actuating the rotary cutter of the cutting device, a lift control valve to control the hydraulic pressure for actuating the lift means, a reach control valve to control the hydraulic pressure for actuating the reach means, and a swing control valve to control the hydraulic pressure for actuating the swing means.

The vehicle body may be comprised of a plurality of longitudinally separated segments which are detachably coupled through a coupling section of the vehicle body, respectively.

Preferably, the cutting device is provided with a laser beam emitting section for emitting a laser beam toward the region to be cut by the rotary cutter so as to allow the current position of the cutting device to be identified.

The laser beam emitting section may be pluralized, and this plurality of the laser beam emitting sections are arranged at positions symmetrical with respect to the rotation center of the rotary cutter, respectively.

The lift means may include a link having a fulcrum located at one end of the link, a movable point located at another end of the link to provide the vertical movement of the cutting device, and an actuated point located at the midpoint of the link and actuated by hydraulic pressure, wherein a link or lever ratio of this link is adapted to provide the amount of displacement of the movable point larger than that of the actuated point.

### BRIEF DESCRIPTION OF THE DRAWINGS

Fig. 1 is an explanatory diagram showing a conventional pipe reclaiming operation;
Fig. 2 is a side view of a reclamation pipe boring apparatus for sewerage according to the present invention;
Fig. 3 is a partially sectional plan view of the reclamation pipe boring apparatus for sewerage according to the present invention;
Fig. 4 is a sectional side view of the reclamation pipe boring apparatus for sewerage according to the present invention;
Fig. 5 is a sectional view taken along the line A-A in Fig. 4;
Fig. 6 is an explanatory diagram showing a hydraulic circuit of the reclamation pipe boring apparatus for sewerage according to the present invention;
Fig. 7 is an explanatory diagram showing an operation for boring a hole in a region of a reclamation pipe corresponding to an opening of a branch pipe with use of the reclamation pipe boring apparatus according to the present invention;
Fig. 8 is an explanatory diagram showing another example of a laser beam emitting section of the reclamation pipe boring apparatus according to the present invention;
Fig. 9 is a sectional side view of a reclamation pipe boring apparatus according to the present invention;
Fig. 10 (a) is a schematic cross sectional view of a frictional coupling used in a reclamation pipe boring apparatus for sewerage according to another embodiment of the present invention;
Fig. 10 (b) is a schematic vertical sectional view of Fig. 10 (a);
Fig. 11 is a side view of lift means according to another embodiment of a reclamation pipe boring apparatus for sewerage of the present invention; and
Fig. 12 is a side view showing the state when the lift means in Fig. 11 is actuated.

### BEST MODE FOR CARRING OUT THE INVENTION

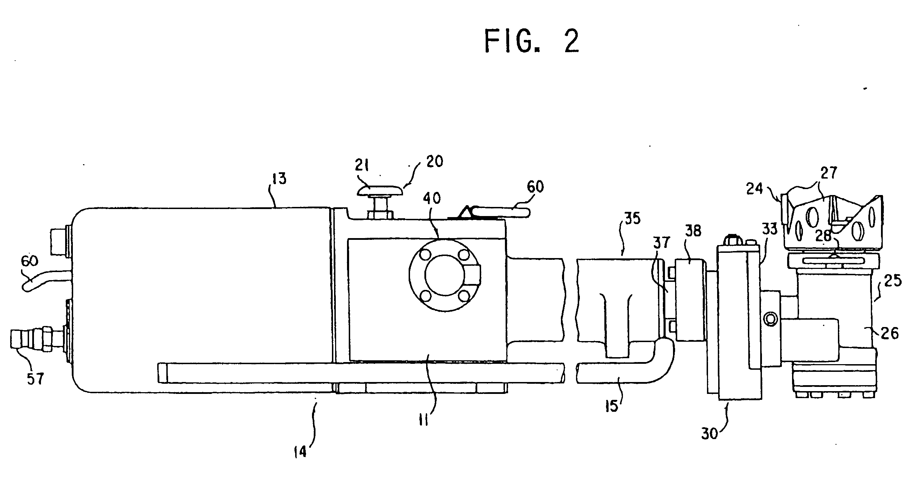

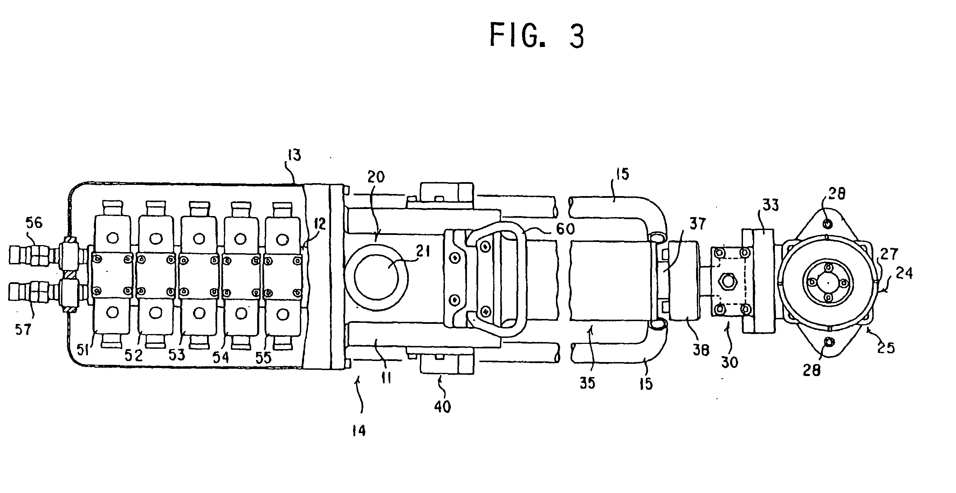

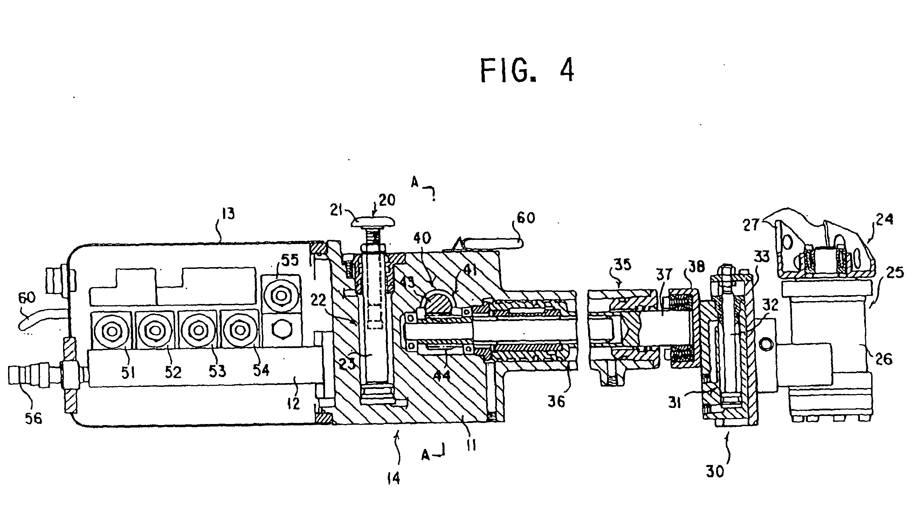

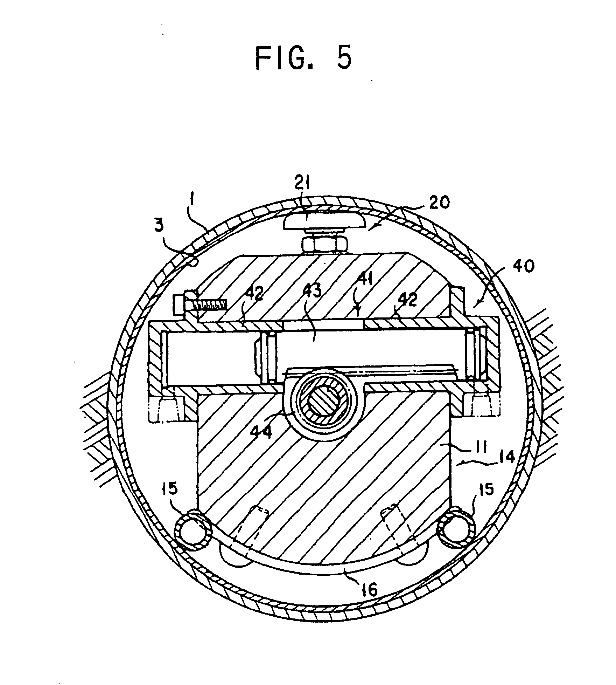

With reference to the drawings, one embodiment of a reclamation pipe boring apparatus for sewerage according to the present invention will now be described. As shown in Figs. 2, 3, 4 and 5, the reclamation pipe boring apparatus includes a vehicle body 14 composed of a main body 11, a base 12 fixed to the rear region of the main body 11, and a approximately cylindrical cover 13 adapted to cover the base 12. A pair of cylindrical sliding boards 15 are longitudinally extended along the lower region of the vehicle body, and are symmetrically arranged so as to match the center of the vehicle body 14 with a center of an objective pipe 1. Each cylindrical sliding board 15 is attached to a bracket 16 detachably mounted to the vehicle body 14 with bolts. Different-sized brackets 16 and sliding boards 15 are prepared corresponding to different sizes of the pipe 1 (e.g. diameters of 200mm, 250mm, 300mm, 350mm and 400mm), respectively, and an optimum bracket 16 and sliding board 15 are selectively mounted to align the center of the vehicle body 14 with the center of the pipe 1 at all times.

The vehicle body 14 is provided with an outrigger 20 located in the longitudinally central region of the vehicle body and orthogonal to the longitudinal axis of the vehicle body with projecting upward. This outrigger 20 has a double-action hydraulic cylinder 22 including a piston rod 23 to which a projecting head 21 is fixed, and thereby the projecting head 21 is moved up and down, or vertically, in response to the actuation or movement of the hydraulic cylinder 22. For fixing the projecting head to the piston rod 23, the projecting head 21 is formed with a female thread and then is fixed to the piston rod 23 through a screw nut. This allows the projecting head 21 to be changed or adjusted in its projecting height. In advance of boring a hole, the hydraulic cylinder 22 is actuated to move the projecting head 21 upward. Thus, the vehicle body 14 may be secured within the pipe 1 by means of the projecting head 21 and the pair of sliding boards 15 attached along the lower region of the vehicle body 14.

In the front region of the vehicle body 14, a cutting device 25 is provided which has a rotary cutter 24 at the front end of the cutting device 25. The cutting device 25 comprises a hydraulic motor 26, and a rotary cutter 24 including a plurality of cutters 27. The rotary cutter 24 is located in the upper region of the hydraulic motor 26 and actuated by the hydraulic motor 26. The cutting device 25 is also provided with a pair of laser beam emitting sections 28 positioned symmetrically with respect to the rotation center of the rotary cutter 24. Each of the laser beam emitting sections 28 is adapted to emit a laser beam toward the region to be cut by the rotary cutter 24. Thus, during the boring operation, the position of the rotary cutter 24 (the position of cutting tool or blades) may be identified by a camera from a branch pipe associated with the boring operation.

In the front region of the vehicle body 14, a lift means 30 is provided to move the cutting device 25 up and down, or vertically, with respect to the vehicle body 14. The lift means 30 includes a double-action hydraulic cylinder 31 disposed perpendicular to the longitudinal axis of the vehicle body 14. A piston rod 32 of the hydraulic cylinder 31 is connected with a mount bracket 33 which is mounted on and slidably guided by the outside of the hydraulic cylinder 31. The cutting device 25 is fixed to the mount bracket 33. Thus, the cutting device 25 may be moved vertically with respect to the vehicle body 14 in response to the actuation of the hydraulic cylinder 31.

In the front region of the vehicle body 14, a reach means 35 is further provided to move the lift means 30 and the cutting device 25 back and forth, or longitudinally, with respect to the vehicle body 14. This reach means 35 includes a double-action hydraulic cylinder 36 located along the longitudinal axis of the vehicle body 14, and the lift means is fixed to a piston rod 37 of the hydraulic cylinder 36 through a mount bracket 38. Thus, the lift means 30 and the cutting device 25 may be moved longitudinally with respect to the vehicle body 14 by the actuation of the hydraulic cylinder 36.

The vehicle body 14 also includes swing means for turning the lift means 30 and the cutting device 25 clockwise and counterclockwise, or laterally, with respect to the vehicle body 14. This swing means 40 has a double-action hydraulic cylinder 41 located in a horizontal position and perpendicular to the longitudinal axis of the vehicle body 14. This hydraulic cylinder 41 includes a piston configured as a rack 43 which is moved laterally within a gear case 42 extending in the lateral direction of the vehicle body 14. A pinion gear 44 is fixed on a shaft spline-engaged with the piston rod 37 of the hydraulic cylinder 36 of the reach means 35, and this pinion gear 44 is engaged with the rack 43 of the hydraulic cylinder 41 of the swing means 40. The rack 43 is linearly moved in response to the actuation of the hydraulic cylinder 41 to rotate the pinion gear 44 engaged with the rack 43 and thereby turn the lift means 30 and cutting device 25 laterally with respect to the vehicle body 14.

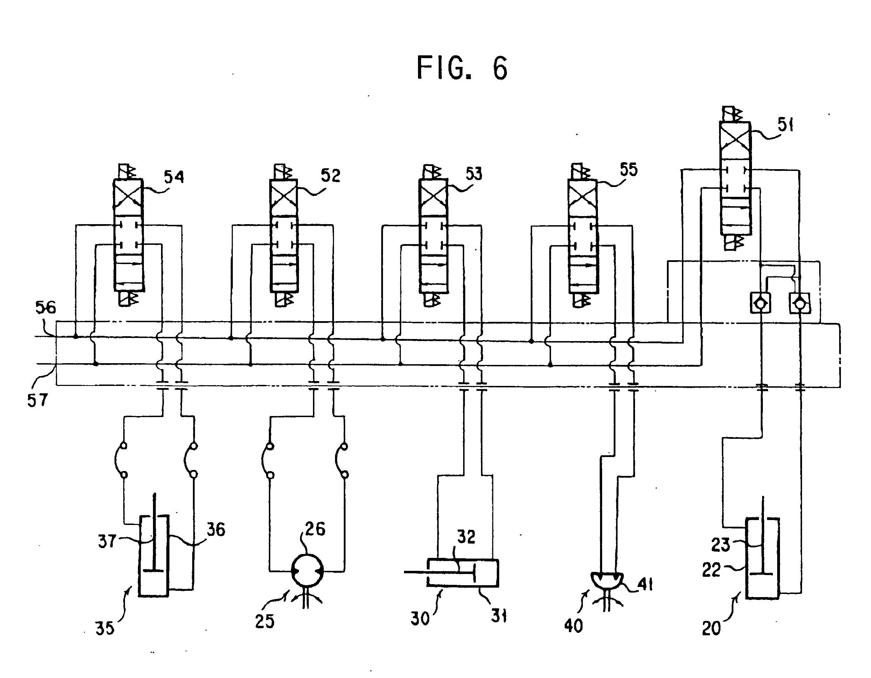

The vehicle body 14 is further provided with a plurality of control valves on the base 12. These control valves comprises an outrigger control valve 51 to control a hydraulic fluid to be supplied to the hydraulic cylinder 22 for actuating the outrigger 20, a cutting control valve 52 to control a hydraulic fluid to be supplied to the hydraulic motor 26 for actuating the rotary cutter 24 of the cutting device 25, a lift control valve 53 to control a hydraulic fluid to be supplied to the hydraulic cylinder 31 for actuating the lift means 30, a reach control valve 54 to control a hydraulic fluid to be supplied to the hydraulic cylinder 36 for actuating the reach means 35, and a swing control valve 55 to control a hydraulic fluid to be supplied to the hydraulic cylinder 41 for actuating the swing means 40. These control valves are coupled with electric cords connected to the rear region of the vehicle body 14, respectively. As shown in Fig. 6, each of the control valves is coupled with two pipelines branched from two ports consisting of a pump port 56 and a tank port 57 which are provided in the rear region of the vehicle body 14. The pump port 56 is supplied with a hydraulic fluid from outside and then supply this hydraulic fluid to the hydraulic motor and each hydraulic cylinder. The hydraulic fluid is supplied from each control valve to the hydraulic motor and each hydraulic cylinder through pipelines (not shown) formed in the main body or frame 11 of the vehicle body 14, hoses (not shown) coupling the frame 11 with the hydraulic motor and each hydraulic cylinder, or the like.

Handgrips 60 are attached to the upper front region of the main body 11 and the cover 13 located in the rear region of the vehicle body 14, respectively. Wire mounting sections are provided, but not shown, in the lower front and lower rear regions of the vehicle body 14, respectively.

A process for boring a hole in a region of a reclamation pipe corresponding to an opening of a branch pipe by the reclamation pipe boring apparatus for sewerage during the pipe reclaiming operation will be described.

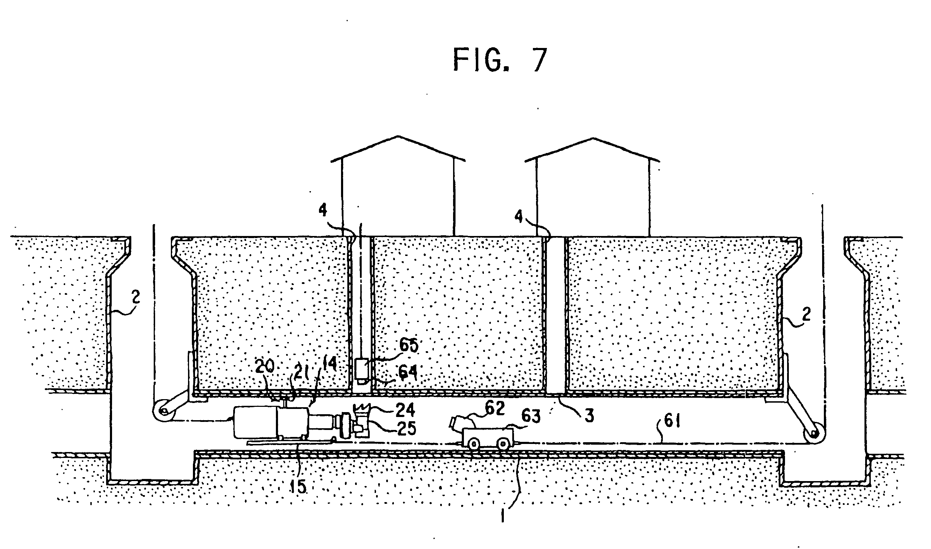

As shown in Fig. 7, for a first, wires 61 are attached to the front and rear ends of the reclamation pipe boring apparatus, respectively, and then the reclamation pipe boring apparatus is inserted into the pipe 1 having the reclamation pipe 3 formed therein. Hereat, a camera device 63 equipped with a camera 63 having a light source such as light fittings is attached to the wire 61, and the camera device 63 is inserted into the pipe 1 so as to be located in front of the reclamation pipe boring apparatus. The camera 62 of the camera device 63 is directed toward the reclamation pipe boring apparatus located in the rear of the camera device 63. On the other hand, another camera device 65 equipped with a camera 64 having a light source such as light fittings is also inserted into the branch pipe 4 closed by the reclamation pipe 3. Then, the camera device 63 and the reclamation pipe boring apparatus are moved within the reclamation pipe 3 by pulling the wire 61 with the use of any suitable take-up or winding device provided outside of the pipe 1. Then, as identifying the position of the reclamation pipe boring apparatus by the camera 62 of the camera device 63, the reclamation pipe boring apparatus is stopped at an approximate position to the branch pipe 4 based on the light from the camera device 65 inserted into the branch pipe 4. Then, the outrigger 20 is actuated to move the projecting head 21 upward. Thus, the projecting head 21 is engaged with the inner wall of the reclamation pipe 3 to secure or stabilize the vehicle body 14 supported by the slide boards 15 within the pipe 1. The cutting device 25 is directed toward the branch pipe 4 by actuating the reach means 35 to longitudinally move the cutting device 25 and actuating the swing means 40 to laterally turn the cutting device 25. Hereat, a laser beam emitted from the laser beam emitting sections 28 located on the right and left sides of the rotary cutter 24 of the cutting device 25 of the reclamation pipe boring apparatus, respectively, is detected by the camera 64 of the camera device 65 inserted into the branch pipe 4. This allows the cutting device 25 to be adequately positioned. Then, the rotary cutter 24 of the cutting device 25 and the lift means 30 are simultaneously actuated to bore a hole in the region of the reclamation pipe 3 corresponding to the opening of the branch pipe 4. Hereat, if the area of the opening of the branch pipe 4 is larger than the diameter of the rotary cutter 24, the cutting device 25 is moved by actuating the reach means 35 and the swing means 40 so as to enlarge the hole.

As described above, a desirable hole may be readily and accurately bored in the region of the reclamation pipe 3 corresponding to the opening of the branch pipe 4 closed by the reclamation pipe 3 formed in the pipe 1.

During the boring operation or the like, the hydraulic cylinder 22 is actuated to move the projecting head 21 of the outrigger 20 upward. Thus, the vehicle body 14 is supported by symmetrical three points provided by the projecting head 21 and the pair of sliding boards 15 attached along the lower region of the vehicle body 14, which allows the vehicle body 14 to be firmly secured within the pipe 1. This may prevent the vehicle body 14 from being displaced during the boring operation so that the hole may be bored with a high degree of accuracy.

Further, the cutting device 25 may be moved longitudinally and laterally by the reach means 35 and the swing means 40. This allows the cutting device 25 to be moved to any desirable position without purposely moving the reclamation pipe boring apparatus itself, which may facilitate to adequately position the reclamation pipe boring apparatus.

Furthermore, the outrigger 20, cutting device 25, lift means 30, reach means 35, and swing means are adapted to be hydralically actuated. This allows these components to be actuated with a sufficient power. In particular, the hydraulic motor 26 for the cutting device 25 may have a significantly enhanced power or improved performance as compared to electric motors. In addition, applying hydraulic power units allows each component to be reduce in size and weight, which also allows the apparatus to be reduce in size and weight as a whole. In particular, the hydraulic motor 26 for the cutting device 25 may have a significantly enhanced downsizing and weight-reduction as compared to electric motors.

Thus, the apparatus reduced in size and weight may be applied to all pipes having various diameters, and may provide a smooth movement within the pipe. This apparatus may also includes various functions, such as lift means 30, reach means 35, swing means 40, outrigger 20 and the like, which may provide an excellent product as reclamation pipe boring apparatuses.

In addition, each control valve (the outrigger control valve 51, cutting device control valve 52, lift control valve 53, reach control valve 54, and swing control valve 55) is provided in the vehicle body 14. This allows the hoses being pipelines necessary for supplying the hydraulic fluid from outside to these control valves to be reduced only to two hoses for supplying and draining the hydraulic fluid. For example, when the vehicle body 14 is provided with five hydraulic actuators, it is necessary to have ten hoses because a minimum of two hoses are generally required to each hydraulic actuator as the hydraulic motor or hydraulic cylinders. These ten hoses provide a bunch of hoses having a large thickness. Thus, connecting the bunch of hoses to the vehicle body 14 can adversely affect when the reclamation pipe boring apparatus is moved. However, by virtue of providing each control valve in the vehicle body 14, the hoses to be connected to the vehicle body 14 may be limited only to two hoses having a significant thinness. This allows problems involved in the hoses to be drastically relieved and may provide a smooth movement of the reclamation pipe boring apparatus within the pipe during the pipe reclaiming operation.

Further, since the laser beam emitted from the laser beam emitting sections 28 provided in the cutting device toward the region to be cut by the rotary cutter 24 is displayed through the camera 64 of the camera device 65, the position of the cutting device 25 may be readily identified.

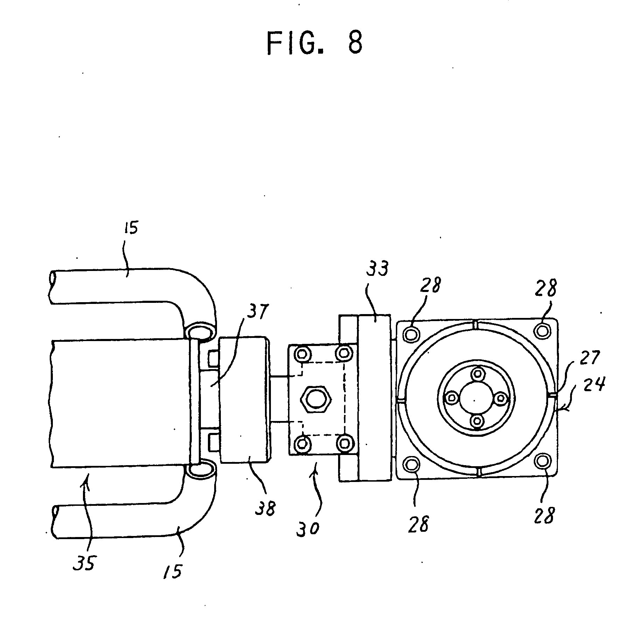

In addition, since the laser beam emitting sections 28 are arranged at the positions symmetrical with respect to the rotation center of the rotary cutter 24, the position of the rotation center of the rotary cutter 24 of the cutting device 25 may be accurately identified by the two laser beams from the laser beam emitting sections 28, which may provide a significantly accurate cutting operation. The present invention is not limited to the above embodiment in which two leaser beam emitting sections 28 are provided on the right and left sides of the rotation center of the rotary cutter 24, and the leaser beam emitting sections may be arranged at three or more positions. For example, as shown in Fig. 8, the leaser beam emitting sections may be arranged at four positions symmetrical with respect to the rotation center of the rotary cutter 24. Arranging the leaser beam emitting sections 28 at the four positions may facilitate to detect the leaser beams during the operation by the camera 64 of the camera device 65 inserted into the branch pipe 4, so that the position of the rotary cutter 24 of the cutting device 25 may be readily and accurately detected.

Another embodiments of a reclamation pipe boring apparatus for sewerage according to the present invention will be described.

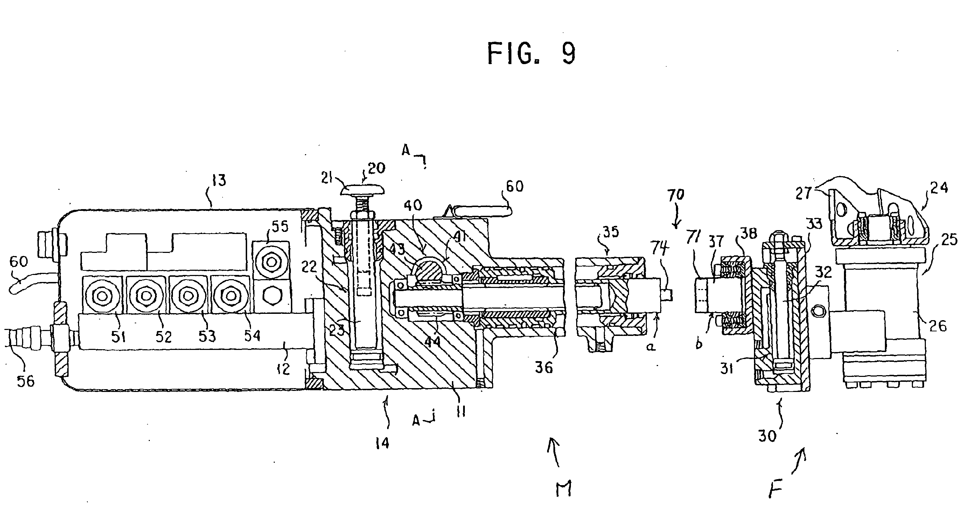

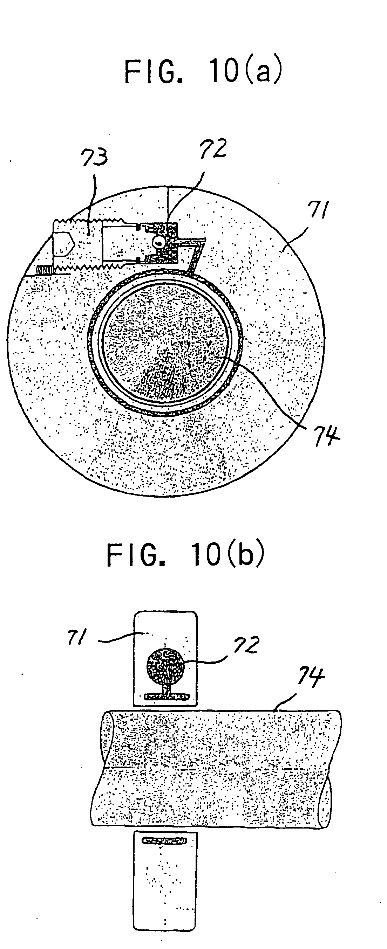

While this apparatus is constructed as with the aforementioned embodiment, the vehicle body 14 is adapted to be separately pluralized in the longitudinal direction of the vehicle body 14. For example, as shown in Fig. 9, the vehicle body 14 is composed of two segments by dividing the piston rod 37 of the hydraulic cylinder 36 in the reach means 35. The vehicle body 14 also includes a coupling section 70 for detachably coupling these segments mutually. This coupling section 70 comprises a frictional coupling in which a pressure medium 72 is enclosed within a circular ring 71 and a pressure screw (a pressurizing device) 73 is provided in the periphery of the ring 71, as shown in Figs. 10 (a) and 10 (b). When the pressure screw 73 is driven in, the pressure medium 72 is pressurized to deform the inner wall of the ring inward, and thereby a shaft 74 inserted in the ring is firmly held by the frictional force with the inner wall of the ring. More specifically, the piston rod 37 of the hydraulic cylinder 36 is divided into a base side " a " and a front side " b ". Then, the base side " a " is attached to the shaft 74, and the front side " b " is fixed to the ring 71 of the frictional coupling. Thus, when the coupling section 70 is released, the reclamation pipe boring apparatus is divided into a front segment F composed of the cutting device 25 and the lift means 30 and a main body segment M composed of the outrigger 20, the swing means 40, the base 12 located in the rear region of the vehicle body 14, and control valves. When the reclamation pipe boring apparatus is carried, the front segment F and the main body segment M may be separated, and individually carried in the state disassembled into small segments. For the operation, the front segment F and the main body segment M are mutually coupled through the coupling section.

Thus, the carrying operation may be significantly facilitated by disassembling the reclamation pipe boring apparatus into small segments to individually carry them. Particularly, when the apparatus is inserted into a manhole during the pipe reclaiming operation, each segment of the apparatus may have a desirable diameter smaller than that of the manhole to facilitate the operation for inserting the apparatus into the manhole. Preparatory to inserting the apparatus into the pipe 1 after separately inserted into the manhole, the front segment F and the main body segment M are coupled with each other through the coupling section 70 to assemble the reclamation pipe boring apparatus.

Further, the vehicle body 14 may be divided into a plurality of segments. In this case, the vehicle body 14 is preferably divided at the boundary between the main body 11 and the base 12 in addition to the aforementioned division in the reach means 35.

Still another embodiments of a reclamation pipe boring apparatus for sewerage according to the present invention will be described.

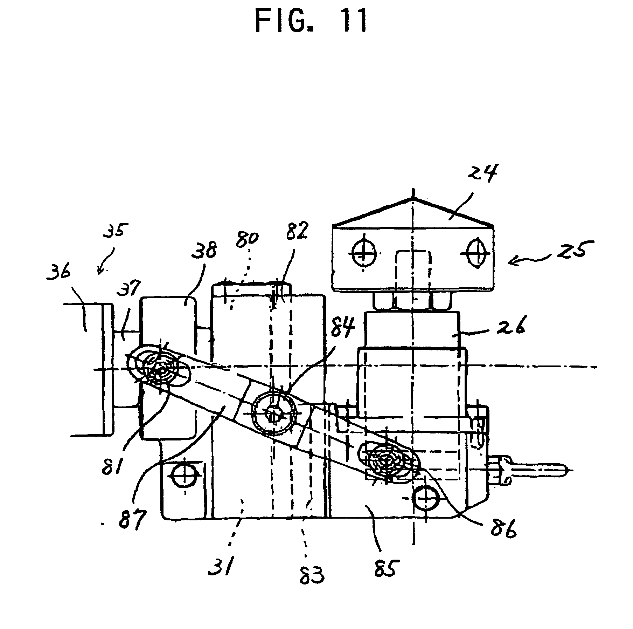

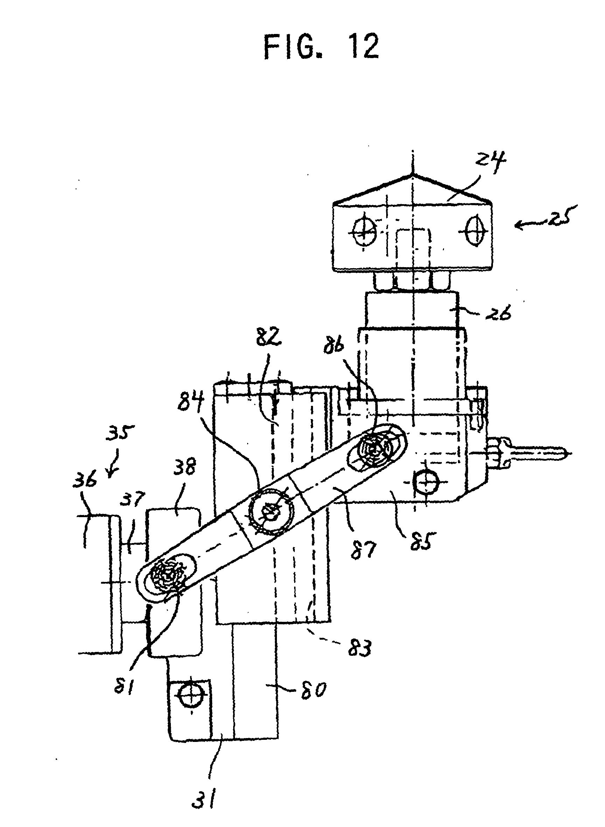

While this apparatus has a similar construction as the aforementioned embodiments, the lift means 30 provided in the front region of the vehicle body 14 has a different construction. As shown in Figs. 11 and 12, this reach means 30 includes a guide rail 80 formed vertically in the mount bracket 38 which is fixed to the piston rod 37 of the hydraulic cylinder 36 in the reach means 35. The bracket 38 is also provided with a pin 81 serving as a fulcrum located on both sides of the bracket 38. A double-action hydraulic cylinder 31 to be vertically actuated is mounted inside of the mount bracket 38. A first sliding block 82 is provided to be slidably moved vertically along the guide rail 80 of the mount bracket 38 by the hydraulic cylinder 31. The first sliding block 82 is also formed with a vertically extended guide rail 83. The first sliding block 82 has a pin 84 serving as an actuated point located on both sides of the first sliding block 82. The second sliding block 85 is provided to be slidably moved vertically along the guide rail 83 of the first sliding block 82. The second sliding block 85 has a pin 86 serving as a movable point located on both sides of the second sliding block 85, and the cutting device 25 is provided in this second sliding block 85. A link 84 is attached respectively to each pin 81 located on the both sides of the mount bracket 38, each pin 84 located on the both sides of the first sliding block 82, and each pin 86 located on the both sides of the second sliding block 85. Specifically, one end of the link 87 is rotatably attached to each pin 81 of the mount bracket 38 to provide the fulcrum, another end of the link 87 being rotatably attached to each pin 86 of the second sliding block 85 to provide the movable point for vertically moving the cutting device 25, and the midpoint of the link 87, e.g. the approximately central point in the longitudinal direction of the link 87, being rotatably attached to each pin 84 of the first sliding block 82 to provide the actuated point to be vertically moved by the hydraulic cylinder 31. An elongate aperture is formed respectively in the one and another ends of the link 87 to allow the link 87 to be moved with respect to each pin 81, 86 with an appropriate allowance.

When the hydraulic cylinder 31 is actuated to slidably move the first sliding block 82 along the guide rail 80 of the mount bracket 38, the link 87 is rotated about the fulcrum by the slidable movement of the first sliding block 82, and this rotation of the link 87 causes the slidable movement of the second sliding block 85 along the guide rail 83 of the first sliding block 82. The amount of displacement of the second sliding block 85 is about two times greater than the amount of displacement of the first sliding block 82 or the amount of actuation or movement in the hydraulic cylinder 31, as determined by a link or lever ratio being a ratio of the distance between the fulcrum and the actuated point and the distance between the fulcrum and the movable point. Thus, the vertical movement of the cutting device 25 corresponding to the amount of the displacement of the second sliding block 85 may be sufficiently increased.

As described above, providing the link 87 to the lift means 30 allows the amount of displacement of the second sliding block 85 to be increased greater than the amount of actuation of the hydraulic cylinder 31 by adequately arranging the link ratio of the link 87. Thus, the vertical movement of the cutting device 25 yielded by the lift means 30 may be significantly increased so that the operation performance of the cutting device 30 may be enhanced, and the boring operation for the branch pipe in the cutting device 25 during the pipe reclaiming operation may be significantly facilitated.

Further, even if a small-size hydraulic cylinder 31 is applied, a desirable vertical movement of the cutting device 25 yielded by the lift means 30 may be assured. This may open the way to apply a small-size hydraulic cylinder and thereby to provide a compact apparatus.

Furthermore, in the above structure, the first sliding block 82 is adapted to slidably move along the mount bracket 38, and the second sliding block 85 is adapted to slidably move along the first sliding block 82. Thus, each height of the mount bracket 38, the first sliding block 82, and the second sliding block 85 may be arranged lower, and thereby compactness may be provided to these components. In addition, even if a large-size (large-diameter) rotary cutter 24 is applied to the cutting device 25, the rotary cutter 24 may be avoid the interference with the mount bracket 38, the first sliding block 82, and the second sliding block 85.

While the link ratio being a ratio of the distance between the fulcrum and the actuated point and the distance between the fulcrum and the movable point is 1 to 2 in the link 87 of the aforementioned embodiment, the present invention is not limited to such a ratio. For example, any other suitable link ratio, such as 1 to 3 or 1 to 4, may be applied.

While the hydraulic cylinders are applied to actuate the outrigger 20, cutting device 25, lift means 30, reach means 35, and swing means 40 in each aforementioned embodiment of the reclamation pipe boring apparatus according to the present invention, an air cylinder may be applied as a substitute for each hydraulic cylinder.

According to the present invention, the apparatus reduced in size and weight may be applied to all pipes having various diameters, and may provide a smooth movement within the pipe. This apparatus may also includes various functions, such as the lift means, reach means, swing means, outrigger and the like, which may provide an improved operation performance.

Further, each control valve provided in the vehicle body allows the hoses being pipelines necessary for supplying the hydraulic fluid from outside to these control valves to be reduced only to two hoses. Thus, intertwist of the hoses may be drastically reduced and the hoses may be bunched with an adequate thinness, which may provide a smooth movement of the apparatus within the pipe during the pipe reclaiming operation, a significantly facilitated handling, and a reduced frequency of failure.

Furthermore, when the vehicle body is comprised of a plurality of segments detachably coupled mutually by the coupling section, the apparatus may be disassembled into small segments to separately carry them, and particularly, these segments may be inserted individually from a manhole during the operation, which allows the carrying operation of the reclamation pipe boring apparatus to be significantly facilitated.

In addition, since the cutting device is provided with the laser beam emitting section emitting a laser beam toward the region to be cut by the rotary cutter, the position of the cutting device may be readily identified during the operation by the laser beam emitted from the laser beam emitting section.

In case of providing a plurality of laser beam emitting sections and arranging this plurality of laser beam emitting sections at the positions symmetrical with respect to the rotation center of the rotary cutter, the position of the rotation center of the rotary cutter of the cutting device may be accurately identified by the laser beams emitted from the laser beams emitting sections, which may provide a significantly accurate cutting operation.

In the example in which the lift means is provided with the link, since the amount of displacement in the movable point is adapted to become greater than that in the actuated point based on the link ratio of this link, the vertical movement of the cutting device yielded by the lift means may be increased. This may provide an enhanced operational ability of the cutting device and an improved cutting operation performance.

## Claims

1. A reclamation pipe boring apparatus for sewerage, comprising:
a vehicle body 14;
an outrigger upwardly projecting via the center of said vehicle body 14 and actuated by hydraulic pressure;
a cutting device 25 disposed in the front region of said vehicle body 14 and actuated by hydraulic pressure, said cutting device having a rotary cutter 24 at the front end of said cutting device;
lift means 30 actuated by hydraulic pressure to vertically move said cutting device 25;
reach means 35 disposed in said vehicle body and actuated by hydraulic pressure to longitudinally move said cutting device 25; and
swing means 40 disposed within said vehicle body and actuated by hydraulic pressure to laterally turn said cutting device 25.

2. A reclamation pipe boring apparatus for sewerage as defined in claim 1, which includes an outrigger control valve 51 to control the hydraulic pressure for actuating said outrigger 20, a cutting control valve 52 to control the hydraulic pressure for actuating said rotary cutter 24 of said cutting device 25, a lift control valve 53 to control the hydraulic pressure for actuating said lift means 30, a reach control valve 54 to control the hydraulic pressure for actuating said reach means 35, and a swing control valve 55 to control the hydraulic pressure for actuating said swing means 40.

3. A reclamation pipe boring apparatus for sewerage as defined in claim 1 or 2, wherein said vehicle body 14 is comprised of a plurality of longitudinally separated segments, wherein said segments are detachably coupled through a coupling section of said vehicle body, respectively.

4. A reclamation pipe boring apparatus for sewerage as defined in either one of claims 1 to 3, wherein said cutting device 25 includes a laser beam emitting section 28 for emitting a laser beam toward the region to be cut by said rotary cutter 24.

5. A reclamation pipe boring apparatus for sewerage as defined in claim 4, wherein said laser beam emitting section 28 is pluralized, wherein said plurality of laser beam emitting sections are arranged at positions symmetrical with respect to the rotation center of said rotary cutter 24, respectively.

6. A reclamation pipe boring apparatus for sewerage as defined in either one of claims 1 to 5, wherein said lift means 30 includes a link 87 having a fulcrum located at one end of said link, a movable point located at another end of said link to provide the vertical movement of said cutting device 25, and an actuated point located at the midpoint of said link and actuated by hydraulic pressure, wherein a link ratio of said link 87 is adapted to provide the amount of displacement of said movable point larger than that of said actuated point.
